# EUROPEAN PATENT SPECIFICATION

(11) **EP 3 380 829 B1**
(45) Date of publication and mention of the grant of the patent: **04.09.2019**
(21) Application number: 16823330.2
(22) Date of filing: 24.11.2016
(51) Int. Cl.: G01N 23/06

(54) **APPARATUS FOR MOVING RADIOGRAPHY DEVICES FOR INDUSTRIAL APPLICATIONS**
VORRICHTUNG ZUM BEWEGEN RADIOGRAFISCHER VORRICHTUNGEN FÜR INDUSTRIELLE ANWENDUNGEN
APPAREIL POUR DÉPLACER DES DISPOSITIFS DE RADIOGRAPHIE POUR APPLICATIONS INDUSTRIELLES

(30) Priority: 26.11.2015 IT UB20155937
(43) Date of publication of application: 03.10.2018
(73) Proprietor: Duemme S.p.A., 26020 Madignano (CR) (IT)
(72) Inventor: MANETTI, Giuseppe, 26020 Madignano (CR) (IT); MANETTI, Jacopo, 26020 Madignano (CR) (IT)
(74) Representative: Raimondi, Margherita
(86) International application number: PCT/IB2016/057092
(87) International publication number: WO 2017/089981

(56) References cited:
- WO-A2-2005/087105
- US-A1- 2012 087 480

## Description

The present invention relates to an apparatus for moving heavy weight radiographic devices which have a high screening penetration capacity, for applications in the industrial sector.

It is known in the manufacturing technical sector that there exists the need to subject products of widely varying types to non-destructive analyses in order to check that they are intact and correctly manufactured also for safety purposes; examples of such products are non-return valves, pipes, welds and the like.

Also known in the sector are manual and/or semiautomatic apparatus which are operated by an operator in order to arrange the radiography apparatus in position correctly aligned with the product to be X-rayed.

These apparatus, however, have significant drawbacks owing to their poor screening penetration capacity in respect of high thicknesses.

Consequently radiographic machines with a particle accelerator suitable for applications requiring the screening of large thicknesses together with a high recording precision have been developed.

These apparatus, however, are very heavy, i.e. with a weight of more than 100 kg and usually of the order of 500-1000 kg, and with large dimensions, and must be located in environments which are fully protected against the harmful ionizing rays and must be able to be manoeuvred manually and/or automatically for correct and precise relative positioning with the object to be X-rayed and activated by means of remote control in order to protect the operating staff.

In a different application sector, in the field of medical imaging diagnostics, devices for moving small-size and low-weight X-ray equipment, weighing at the most a few tens of kg, are known for example from US2012/087480A1 and WO2005/087105A2.

In this application area, the patient is lying flat on a bed and the known movement devices are necessarily fixed to the ceiling of the X-ray room so that they may be suitably positioned above the patient; fixing to the ceiling is possible only because the X-ray equipment has a low weight and small dimensions, the corresponding rays not having to penetrate thick and heavy metal objects.

No indication is given in the documents US2012/087480 A1 and WO2005/087105 A2 as to how to move heavy radiography apparatus for industrial applications.

The technical problem which is posed therefore is that of providing an apparatus for moving heavy weight particle-accelerator radiography apparatus for industrial applications, which has a large number of degrees of freedom so as to allow the necessary relative positioning movements with respect to the part to be analysed.

In connection with this problem it is also desirable that this apparatus should be easy and low-cost to produce, be able to be installed at any user location using normal supporting means and preferably be remotely controllable.

These results are obtained according to the present invention by an apparatus for moving radiography devices according to the characteristic features of Claim 1.

Further details may be obtained from the following description of a non-limiting example of embodiment of the subject of the present invention, provided with reference to the accompanying drawings, in which:
Figure 1: shows an exploded perspective view of the apparatus according to the present invention;
Figure 2: shows a front view of the apparatus of Fig. 1 in the assembled condition;
Figure 3: shows a side view of the apparatus of Fig. 1 in the assembled condition;
Figure 4a: shows a top plan view of a first carriage of an apparatus according to the invention;
Figure 4b: shows a cross-sectional view along a vertical plane indicated by IVb-IVb in Fig. 4a;
Figure 5: shows a front view of a second carriage of an apparatus according to the invention;
Figure 6: shows a perspective view of the rotational movement about a vertical axis of the support part of the radiography device;
Figure 7: shows a schematic view of the device for movement in the two senses of rotation of the radiography device;
Figure 8: shows a perspective view of the swivelling movement about a longitudinal axis of the radiography device;
Figure 9: shows a schematic view of the second carriage connected to the support of the radiography device and the actuating means for the swivelling movement;

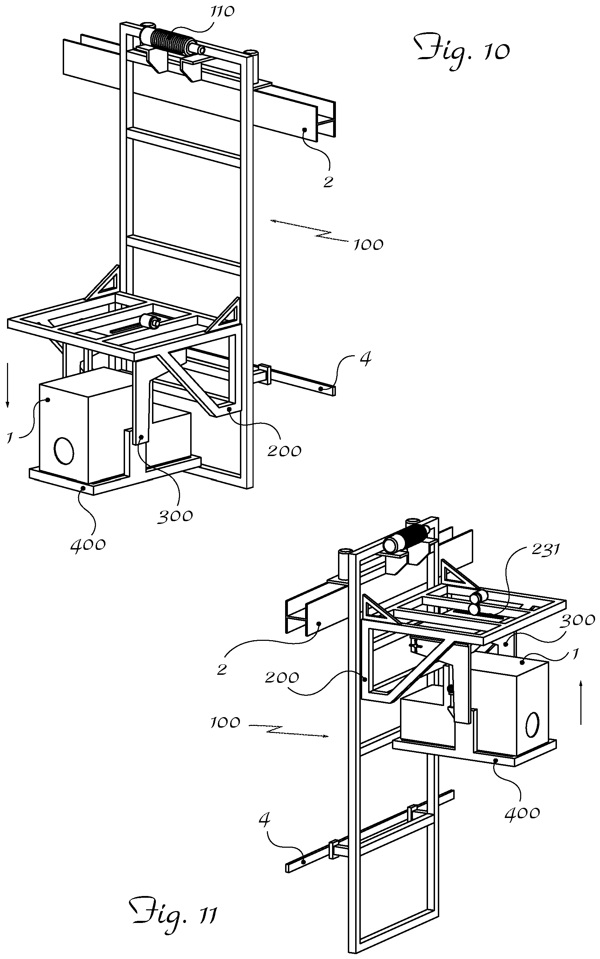

Figures 10 and 11: are views of the translational movement in the vertical direction of the apparatus according to the invention;
Figure 12: shows the layout of the installation according to the invention; and
Figure 13: shows a schematic perspective view of the installation according to Fig. 10 with the apparatus according to the invention.

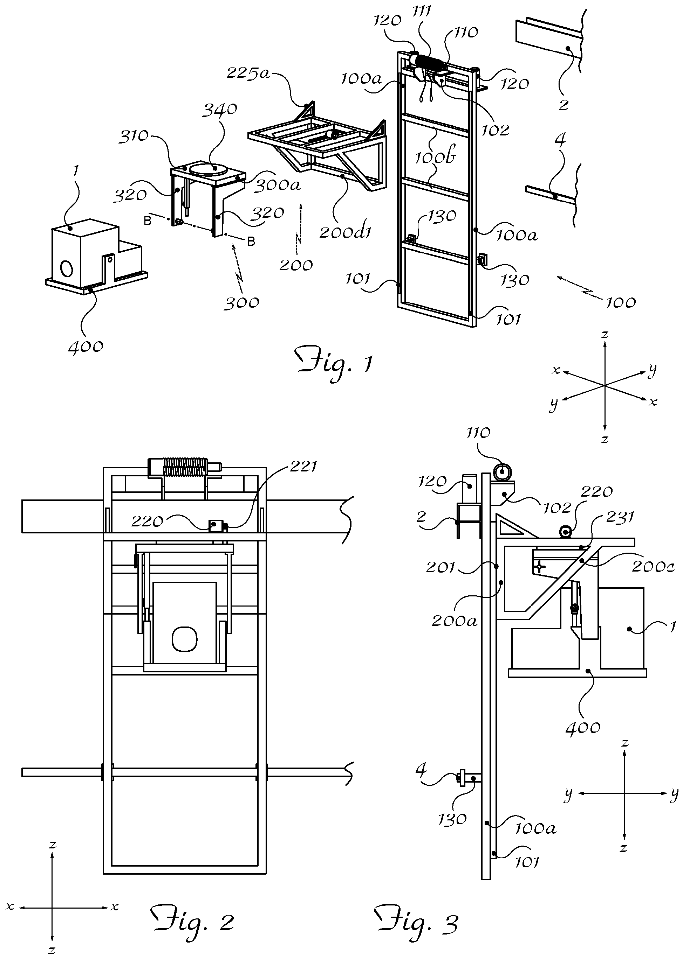

As shown in Fig. 1 and assuming solely for the sake of convenience of the description and without a limiting meaning a set of three reference axes in a longitudinal direction X-X, parallel to the width of the apparatus; transverse direction Y-Y, parallel to the thickness of the apparatus; and vertical direction Z-Z perpendicular to the other two directions and parallel to the height of the apparatus and, with reference to this latter direction Z-Z, a top part of the apparatus and a bottom part opposite thereto will also be assumed.

With this layout, an example of embodiment of an apparatus according to the invention for moving a radiography machine 1 comprises:
- a substantially rectangular frame 100 extending parallel to the plane X-Z and with a greater dimension parallel to the vertical direction Z-Z and translatably movable in both senses of the longitudinal direction;
- a first carriage 200 movable on the frame 100 in both senses of the vertical direction Z-Z;
- a second carriage 300 translatably movable in both senses of the transverse direction Y-Y relative to the first carriage 200 and designed to rotate about an axis parallel to the vertical direction Z-Z;
- a bottom support 400 for a radiography device 1, in particular a particle accelerator, designed to swivel about an axis parallel to the longitudinal direction X-X relative to the second carriage 300.

In greater detail and according to preferred embodiments which may be realized singly or in combination, it is envisaged that:
the apparatus comprises preferably a beam extending in the longitudinal direction X-X and able to be fastened to a wall for fixing the apparatus, on which the latter may translate in both senses of the said longitudinal direction X-X.

### FRAME 100

The frame 100 is formed by vertical uprights 100a and longitudinal cross members 100b, whereby guides 101 for the sliding movement of the first carriage 200 in the vertical direction are fixed to the uprights 100a;
at the top the frame 100 has a pair of brackets 102 designed to support means for moving the first carriage, such as a winch 110, with a longitudinal axis, the cables 111 of which are attached to the first carriage 200 for controlled raising and lowering thereof;
the top part of the frame 100 also has, connected thereto, a motor, preferably a pair of motors, 120 with a vertical axis, which are synchronized with each other and designed to rotate rollers acting on the fixed longitudinal beam 2 so as to form means for translational movement of the frame 100 in both senses of the longitudinal direction X-X.

In a suitable intermediate position in the vertical direction Z-Z the frame 100 has counter-thrust struts 130 extending parallel to the transverse direction Y-Y that, during use, keep the frame spaced and aligned with respect to a wall to which the beam 2 is also fixed, preferably acting against a longitudinal contact plate 4 fixed to said wall, thus allowing cantilevered wall mounting of the heavy weight apparatus to be counterbalanced.

### FIRST CARRIAGE 200

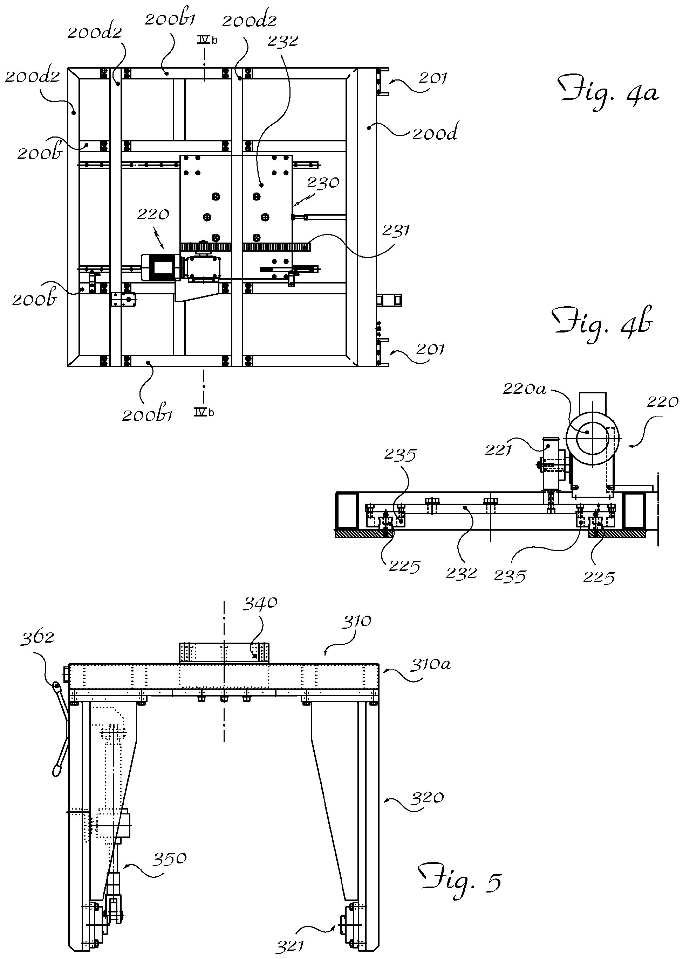

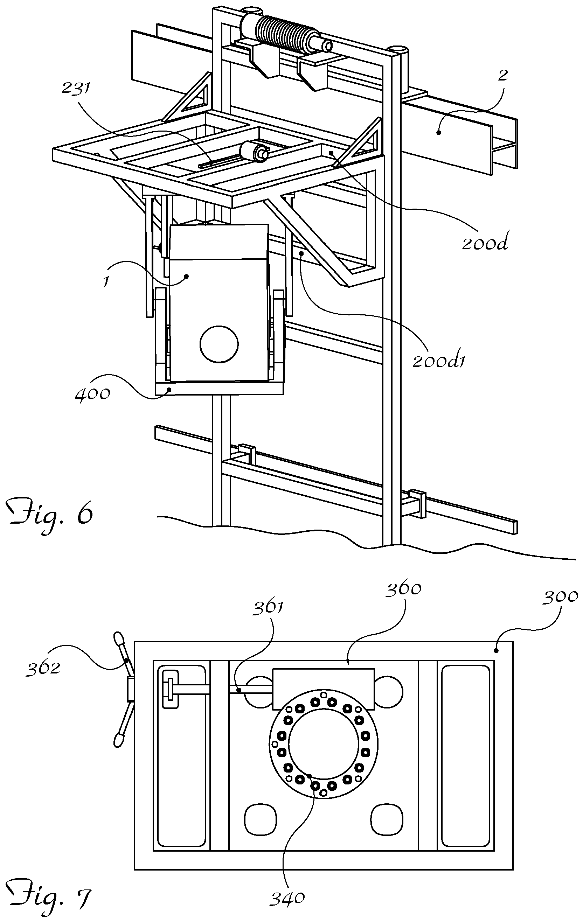

According to preferred embodiments (Figs. 3, 4a, 4b) the first carriage 200 comprises:
-- vertical uprights 200a having, mounted thereon, shoes 201 sliding on the guides 101 of the frame 100, for the vertical translatory movement of the second carriage 200 with respect to the frame 100;
-- a first, top, longitudinal arm 200d for connecting the vertical uprights 200a in the longitudinal direction X-X; and preferably at least one second bottom arm 200d1 (Fig. 6) for connecting the said uprights in a bottom position and at a suitable distance in the vertical direction X-X from the first arm 200d;
-- a pair of parallel transverse arms 200b, extending from the first longitudinal arm 200d, for carrying an assembly 220,230 for movement of the second carriage 300 in the transverse direction Y-Y.
-- said assembly 220,230 for movement of the second carriage 300 in the transverse direction Y-Y comprises:
   --- an assembly part 220 which is fixed transverse translation-wise relative to the arms 200b and comprises a pair of transverse guides 225 each of which is respectively fixed to one of the transverse arms 200b in an internal position in the longitudinal direction X-X relative to said arm 200b (for example by means of a support gusset 225a of the guide 225 extending parallel to a plane X-Y from the bottom surface of the respective arm 200b), and
      a motor 220a, for example an electric gear motor, the shaft of which carries a gearwheel 221 with a longitudinal axis designed to mesh with a linear transverse rack 231 integral during use to the second carriage 300;
   --- an assembly part 230 translatably movable in both senses of the transverse direction Y-Y relative to the arms 200b and comprising a flange 232 for supporting the second carriage 300.

As shown in Figs. 4a,4b the flange 232:
---- extends parallel to the plane X-Y, with a longitudinal extension smaller than the longitudinal distance between the two transverse arms 200b;
---- is mounted on transverse shoes 235 for coupling on the guides 325 for translation movement of the flange 232 in the transverse direction; and
---- comprises, fixed thereon, the transverse rack 231 on which the gearwheel 221 meshes so as to cause, upon operation of the motor 220a, a translation of the flange 232 in both senses of the transverse direction Y-Y.

According to preferred embodiments, the first carriage 200 is completed by:
-- outer transverse arms 200b1 extending from the uprights 200a to which they are also connected by inclined arms 200c and reinforcing cross members;
-- longitudinal cross members 200d2 for connecting the transverse arms 200b, 200b1 and reinforcing the structure of the first carriage 200.

### SECOND CARRIAGE 300

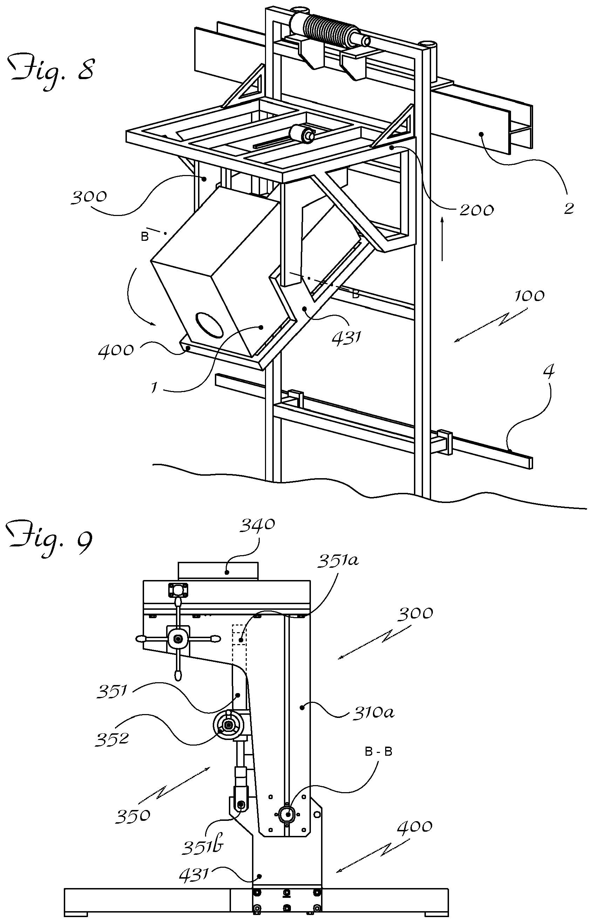

The second carriage 300 comprises (Figs. 5, 7, 9):
-- a top perimetral frame 310 which in a central position of its area has a swivel ring 340 provided with a flange for fastening to the said flange 232 of the second carriage 220 by fixing means such as screws or bolts;
-- the swivel ring 340 rotates about a vertical axis and is constrained to the second carriage 300 so that the latter is able to rotate (Figs. 7,8), in both senses, about the said axis, upon operation of
-- means 360 for controlling and rotationally actuating the second carriage 300, preferably actuated by a worm 361 which can mesh with a helical wheel of the swivel ring 340 and can be operated for example manually by means of a handwheel 362 (Figs. 5,7).

It is envisaged, however, that actuation may also be realized by a drive system which can be operated and programmed electronically on-board the machine or remotely.

Each transverse flank 310a of the frame 310 of the second carriage 300 has
-- longitudinal pins or holes designed to form an axis B-B for longitudinal rotation
to which a respective flange 431 of the bottom support 400 is connected by means of respective complementary holes or pins; in this way the bottom support 400, which carries the radiographic device 1, is able to tilt in both senses about said longitudinal axis B-B so as to incline, suitably and as required, the radiography machine 1 upwards or downwards.

The tilting movement of the bottom support 400 is provided by
-- a device 350 (Figs. 5,9), preferably comprising a jack 351 with screw/female thread and/or a rolling ball screw and extending in the vertical direction Z-Z, a top part 351a of said jack being fixed to the top perimetral frame 310 of the second carriage and the bottom part thereof 351b being connected to the flange 431 of the bottom support 400 (Fig. 9) in an eccentric position with respect to the longitudinal axis B-B of rotation.

The actuation of the tilting movement is performed manually by means of a handwheel 352; it is envisaged however that it may also be performed by means of a controllable drive system.

According to preferred embodiment it is envisaged that all the manual and/or motorized movement devices are connected to position detection sensors such as encoders and/or optical position detectors for control by automatic programming means.

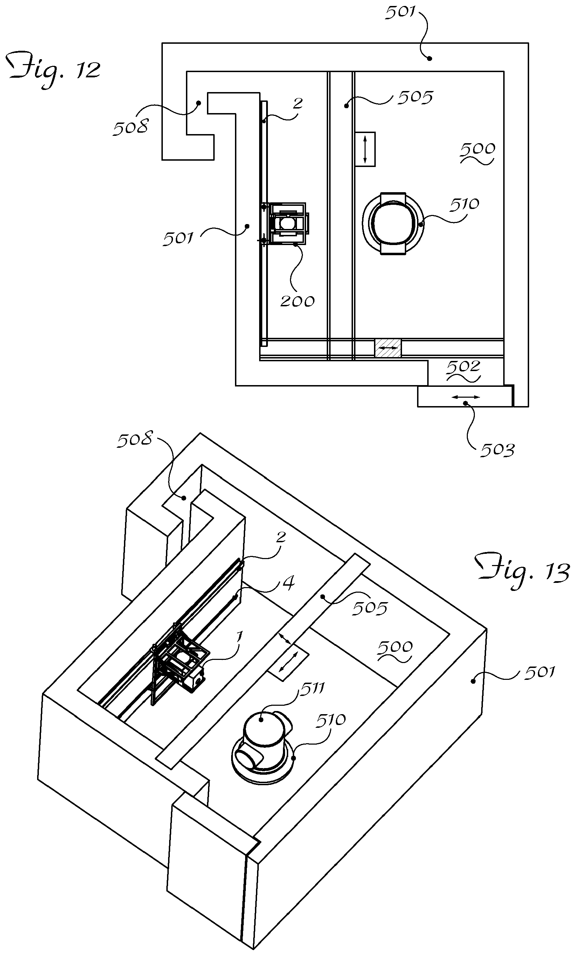

The present invention relates further to a system for radiographic analysis of parts with large thicknesses which comprises:
- a closed isolation chamber (or bunker) 500 with walls 501 having a thickness such as to ensure containment of the radiation emitted by a radiography machine 1;
   one of the vertical walls of the chamber has an opening 592 closed by a door 503 sliding on guides and moved by suitable controlled actuating systems and in turn having a thickness such as to contain the radiation;
- an apparatus as described above for moving the radiography machine 1;
- the beam 2 extending in the transverse direction Y-Y and fixed to one of the vertical walls of the isolation chamber on which beam the apparatus may translate in both senses of the said longitudinal direction X-X;
- a gantry structure 505 (only schematically shown in Fig. 13) movable parallel to the two directions, i.e. longitudinal direction X-X and transverse direction Y-Y, for bringing the part 13 to be inspected into a position for exposure to the X-rays, the gantry structure being positioned on and fixed to the ceiling/walls of the chamber 500;
- a rotating table 510 positioned at a suitable distance in the transverse direction X-X from the movement apparatus, for positioning the part to undergo the radiographic analysis, which part may thus be rotated so as to bring the single sections to be X-rayed into alignment with the gun of the X-ray emission accelerator 1 which is in turn correctly positioned by means of the movement apparatus.

Preferably the system has means for detecting the distance of the X-ray emission gun from a reference point which in a simplified embodiment may be formed by one or more of the walls of the isolation chamber or by a zero point forming the origin of a reference system with two or three axes in the directions (X-X, Y-Y, Z-Z).

According to preferred embodiments these means comprise optical emitters for example of the LED or laser type which are fixed to the bottom support 400 which is turn fixed, during use, to the accelerator 1.

In particular, at least three optical sensors may be provided, being mounted at a point situated at a known distance from the radiography apparatus and designed to detect a respective position of the apparatus along a respective axis of the set of three axes X-Y-Z, relative to a fixed and known external reference point, such as a perimetral wall or a floor or a ceiling.

Preferably the system comprises a labyrinth 508 which is formed by staggered and connected compartments and walls and which connects the isolation room to a control chamber - adjacent thereto - which may contain control devices (not shown) able to manage the accelerator 1, in addition to control panels for managing the apparatus according to the invention and/or the gantry structure and/or the radiography machines, for example comprising a control unit equipped with circuit boards and/or PLCs and/or inverters for correct control and electrical powering which may be performed for example by means of electric cables connected to the various parts which can be operated, and position detection and transmission sensors and end-of-travel means which are conventional per se and therefore not described in detail.

Also envisaged are connections by means of data lines or Wi-Fi for transmission of the data detected by the various sensors for the movement information of the various movable parts from the apparatus to a remote control, programming and operating system.

Said remote control system is arranged in a zone suitably isolated from the radiation so as to ensure the safety of the operating staff.

It is therefore clear how the device according to the invention allows precise movement of the radiographic machines with a large number of degrees of freedom, allowing precise and correct positioning of the machine to be obtained with respect to the object to be analysed.

Although described in the context of a number of embodiments and a number of preferred examples of embodiment of the invention it is understood that it is within the competence of the person skilled in the art to replace the various parts of the apparatus with equivalent means, thus for example preferred embodiments of the actuating systems are envisaged whereby the latter, instead of being manual, may be realized by means of motors or oil-hydraulic means which can be controlled and are remotely controllable.

The scope of protection of the present invention is therefore defined solely by the claims which follow.

## Claims

1. Apparatus for moving a heavy weight radiography device (1) for industrial applications, comprising:
- a substantially rectangular frame (100) extending parallel to a plane (X-Z) parallel to a longitudinal lengthwise direction (X-X) of the apparatus and to a vertical heightwise direction (Z-Z) of the apparatus, having a greater dimension parallel to the vertical direction (Z-Z) and translatably movable in both senses of the longitudinal direction (X-X) via means for translational movement of the frame (100);
- a first carriage (200) movable on the frame (100) in both senses of the vertical direction (Z-Z);
- a second carriage (300) mounted on and displaceable relative to the first carriage (200) in both senses of a transverse direction (Y-Y) orthogonal to the longitudinal (X-X) and vertical (Z-Z) directions and adapted to rotate about an axis parallel to the vertical direction (Z-Z);
- a bottom support (400) for the radiography device (1), mounted on the second carriage (300) and adapted to swivel about an axis parallel to the longitudinal direction (X-X), relative to the second carriage (300);
- a beam (2) extending in the longitudinal direction (X-X) and able to be fixed to a wall, said beam comprising means complementing the means for translational movement of the frame (100) which may thereby move on the beam (2) in both senses of the said longitudinal direction (X-X);
wherein in an intermediate position in the vertical direction (Z-Z) the frame (100) has counter-thrust struts (130), extending parallel to the transverse direction (Y-Y) for keeping, during use, the frame spaced and aligned with respect to a wall to which the beam (2) is also fixed.

2. Apparatus according to Claim 1, **characterized in that** the frame (100) comprises vertical uprights (100a) and longitudinal cross members (100b), guides (101) for the sliding movement of the first carriage (200) in the vertical direction being fixed to the uprights (100a);
and **in that** the frame (100) has, at the top part thereof, means for moving the first carriage (200), for controlled raising and lowering thereof in the vertical direction (Z-Z).

3. Apparatus according to Claim 2, **characterized in that** said means for moving the first carriage comprise a winch (110), with a longitudinal axis, the cables (111) thereof being attached to the first carriage (200).

4. Apparatus according to any one of Claims 1-3, **characterized in that** said means for translational movement of the frame (100) comprise a motor (120), preferably a pair of synchronized motors, with a vertical axis, designed to cause the rotation of rollers acting on the longitudinal beam (2) for translational movement of the frame (100) in both senses of the longitudinal direction (X-X).

5. Apparatus according to any one of Claims 1-4, **characterized in that** it comprises a longitudinal contact plate (4) which is fixed to said wall and against which the counter-thrust struts (130) act.

6. Apparatus according to any one of the preceding claims, **characterized in that** the first carriage (200) comprises:
-- vertical uprights (200a) having, mounted thereon, shoes (201) for sliding on the guides (101) of the frame (100), for the vertical translational movement of the second carriage (200) with respect to the frame (100);
-- a first, top, longitudinal arm (200d) for connecting the vertical uprights (200a) in the longitudinal direction (X-X);
-- a pair of parallel transverse arms (200b) extending from the first longitudinal arm (200d) and designed to carry an assembly (220,230) for movement of the second carriage (300) in the transverse direction (Y-Y).

7. Apparatus according to the preceding claim, **characterized in that** said assembly (220,230) for movement of the second carriage (300) in the transverse direction (Y-Y) comprises:
--- an assembly part (220) which is fixed transverse translation-wise relative to the arms (200b) and comprises a pair of transverse guides (225) each respectively fixed to one of the transverse arms (200b) in an internal position in the longitudinal direction (X-X) relative to said arm (200b) and
a motor (220a), the shaft of which carries a gearwheel (221) with a longitudinal axis designed to mesh with a transverse linear rack (231) integral during use with the second carriage (300).

8. Apparatus according to the preceding claim, **characterized in that** said assembly (220,230) for movement of the second carriage (300) in the transverse direction (Y-Y) comprises:
--- an assembly part (230) translatably movable in both senses of the transverse direction (Y-Y) relative to the arms (200b) and comprising a flange (232) for carrying the second carriage (300), the transverse rack (231) being fixed to the flange (232),
the gearwheel (221) meshing with the rack (231) so as to cause, upon operation of the motor (220a), translation of the flange (232) in both senses of the transverse direction (Y-Y).

9. Apparatus according to claim 8 wherein the flange (232) has a longitudinal extension smaller than the longitudinal distance between the two transverse arms (200b) and is mounted on transverse sliding shoes (235) for coupling on the guides (225) for translational movement of the flange (232) in the transverse direction.

10. Apparatus according to any one of the preceding claims, wherein the second carriage (300) comprises:
-- a top perimetral frame (310) which in a central position is constrained to a swivel ring (340) rotating about a vertical axis so that the third carriage (300) is able to rotate in both senses about said axis;
the swivel ring, during use, being translatably integral with a flange (232) of the second carriage (300) via fixing means.

11. Apparatus according to the preceding claim, **characterized in that** the second carriage (300) comprises means (360) for controlling and rotationally actuating the second carriage (300), which act on the swivel ring (340), wherein said rotational actuation means (360) preferably comprise a worm (361) which can mesh with a helical wheel of the swivel ring and can be operated by means of a handwheel (362) or a controlled motor.

12. Apparatus according to any one of Claims 10-11, **characterized in that** each transverse flank (310a) of the second carriage frame (310) is provided with
-- longitudinal pins or holes designed to form an axis for longitudinal rotation (B-B) to which a respective flange (431) of the bottom support (400) is connected by means of respective complementary holes or pins so as to allow the tilting movement of the bottom support (400) in both senses about said longitudinal axis (B-B).

13. Apparatus according to the preceding claim, wherein the tilting movement of the bottom support (400) is provided by
-- a device (350) comprising a jack (351) with screw/female thread and/or a rolling ball screw and extending in the vertical direction (Z-Z), a top part (351a) of said jack being fixed to the top perimetral frame (310) of the second carriage (300) and the bottom part (351b) thereof being connected to the flange (431) of the bottom support (400) in an eccentric position with respect to the longitudinal axis (B-B) of rotation.

14. System for radiographic analysis of industrial parts with large thicknesses which comprises:
- a closed isolation chamber (500) with walls (501) having a thickness such as to ensure containment of the radiation emitted by a radiography machine (1);
- an apparatus for moving the radiography machine (1) according to anyone of the preceding claims;
- a gantry structure (505) movable parallel to the two directions, i.e. longitudinal direction (X-X) and transverse direction (Y-Y), for bringing the part (511) to be inspected into a position for exposure to the X-rays, the gantry structure being positioned on the ceiling and/or on the walls of the chamber (500).

15. System according to the preceding claim, comprising: a rotary table (510) positioned inside the chamber (500), for positioning the part (511) to undergo radiographic inspection; and or
- detection means which comprise optical emitters fixed to the bottom support (400); and or
- a labyrinth (508) which is formed by a staggered and connected arrangement of compartments and walls and which connects the isolation chamber to a control chamber adjacent thereto.

## Patentansprüche

1. Vorrichtung zum Bewegen einer schweren Radiographieeinrichtung (1) für gewerbliche Anwendungen, umfassend:
- einen im Wesentlichen rechteckigen Rahmen (100), welcher sich parallel zu einer Ebene (X-Z) erstreckt, die parallel zu einer longitudinalen Längsrichtung (X-X) der Vorrichtung und zu einer vertikalen Höhenrichtung (Z-Z) der Vorrichtung verläuft, welcher eine größere Abmessung parallel zu der vertikalen Richtung (Z-Z) aufweist und in beiden Richtungen der longitudinalen Richtung (X-X) über Mittel für translatorische Bewegung des Rahmens (100) translatorisch bewegbar ist;
- einen ersten Schlitten (200), der auf dem Rahmen (100) in beiden Richtungen der vertikalen Richtung (Z-Z) beweglich ist;
- einen zweiten Schlitten (300), der auf dem ersten Schlitten (200) angebracht und relativ zu diesem in beiden Richtungen einer Querrichtung (Y-Y) orthogonal zur longitudinalen (X-X) und vertikalen (Z-Z) Richtung verschiebbar ist und ausgelegt ist, um um eine Achse parallel zur vertikalen Richtung (Z-Z) zu drehen;
- eine untere Halterung (400) für die Radiographieeinrichtung (1), die an dem zweiten Schlitten (300) angebracht und ausgelegt ist, um um eine Achse parallel zur longitudinalen Richtung (X-X) relativ zu dem zweiten Schlitten (300) zu schwenken;
- einen Träger (2), der sich in der longitudinalen Richtung (X-X) erstreckt und an einer Wand befestigt werden kann, wobei der Träger Mittel umfasst, die die Mittel für translatorische Bewegung des Rahmens (100) ergänzen, die sich dadurch auf dem Träger (2) in beiden Richtungen der longitudinalen Richtung (X-X) bewegen können;
wobei der Rahmen (100) in einer Zwischenposition in der vertikalen Richtung (Z-Z) Gegenschubstreben (130) aufweist, die sich parallel zur Querrichtung (Y-Y) erstrecken, um den Rahmen während der Nutzung im Abstand und in Ausrichtung zu einer Wand zu halten, an der auch der Träger (2) befestigt ist.

2. Vorrichtung nach Anspruch 1, **dadurch gekennzeichnet, dass** der Rahmen (100) vertikale Stützen (100a) und Längsquerträger (100b) umfasst, wobei an den Stützen (100a) Führungen (101) für die Gleitbewegung des ersten Schlittens (200) in der vertikalen Richtung befestigt sind;
und dass der Rahmen (100) an seinem oberen Teil Mittel zum Bewegen des ersten Schlittens (200), zum kontrollierten Heben und Senken desselben in vertikaler Richtung (Z-Z) aufweist.

3. Vorrichtung nach Anspruch 2, **dadurch gekennzeichnet, dass** die Mittel zum Bewegen des ersten Schlittens eine Winde (110) mit einer Längsachse umfassen, deren Seile (111) an dem ersten Schlitten (200) befestigt sind.

4. Vorrichtung nach einem der Ansprüche 1-3, **dadurch gekennzeichnet, dass** die Mittel für translatorische Bewegung des Rahmens (100) einen Motor (120), vorzugsweise ein Paar synchronisierter Motoren, mit einer vertikalen Achse umfassen, der ausgelegt ist, um die Drehung von Rollen, die auf den Längsträger (2) wirken, für translatorische Bewegung des Rahmens (100) in beiden Richtungen der longitudinalen Richtung (X-X) zu bewirken.

5. Vorrichtung nach einem der Ansprüche 1-4, **dadurch gekennzeichnet, dass** sie eine Längskontaktplatte (4) umfasst, die an der Wand befestigt ist und gegen die die Gegenschubstreben (130) wirken.

6. Vorrichtung nach einem der vorhergehenden Ansprüche, **dadurch gekennzeichnet, dass** der erste Schlitten (200) umfasst:
- vertikale Stützen (200a) mit darauf angebrachten Schuhen (201) zum Gleiten auf den Führungen (101) des Rahmens (100) für die vertikale translatorische Bewegung des zweiten Schlittens (200) in Bezug auf den Rahmen (100);
- einen ersten oberen Längsarm (200d) zum Verbinden der vertikalen Stützen (200a) in longitudinalen Richtung (X-X);
- ein Paar paralleler Querarme (200b), die sich vom ersten Längsarm (200d) erstrecken und ausgelegt sind, um eine Anordnung (220, 230) für Bewegung des zweiten Schlittens (300) in Querrichtung (Y-Y) zu tragen.

7. Vorrichtung nach dem vorhergehenden Anspruch, **dadurch gekennzeichnet, dass** die Anordnung (220, 230) für Bewegung des zweiten Schlittens (300) in der Querrichtung (Y-Y) umfasst:
- ein Montageteil (220), das relativ zu den Armen (200b) in Bezug auf Quertranslation befestigt ist und ein Paar Querführungen (225) umfasst, die jeweils an einem der Querarme (200b) an einer inneren Position in longitudinaler Richtung (X-X) relativ zu dem Arm (200b) befestigt sind, und einen Motor (220a), dessen Welle ein Zahnrad (221) mit einer Längsachse trägt, das ausgelegt ist, um mit einer querlaufenden linearen Zahnstange (231) in Eingriff zu kommen, die während der Nutzung mit dem zweiten Schlitten (300) integral ist.

8. Vorrichtung nach dem vorhergehenden Anspruch, **dadurch gekennzeichnet, dass** die Anordnung (220, 230) für Bewegung des zweiten Schlittens (300) in der Querrichtung (Y-Y) umfasst:
- ein Montageteil (230), das in beiden Richtungen der Querrichtung (Y-Y) relativ zu den Armen (200b) translatorisch bewegbar ist und einen Flansch (232) zum Tragen des zweiten Schlittens (300) umfasst,
wobei die querlaufende Zahnstange (231) am Flansch (232) befestigt ist, wobei das Zahnrad (221) mit der Zahnstange (231) in Eingriff tritt, um beim Betrieb des Motors (220a) eine Translation des Flansches (232) in beiden Richtungen der Querrichtung (Y-Y) zu bewirken.

9. Vorrichtung nach Anspruch 8, wobei der Flansch (232) eine Längserstreckung aufweist, die kleiner ist als der Längsabstand zwischen den beiden Querarmen (200b) ist, und auf Quergleitschuhen (235) zum Koppeln an den Führungen (225) für translatorische Bewegung des Flansches (232) in der Querrichtung montiert ist.

10. Vorrichtung nach einem der vorhergehenden Ansprüche, wobei der zweite Schlitten (300) umfasst:
- einen oberen Umfangsrahmen (310), der in einer mittigen Position auf einem Schwenkring (340) gehalten ist, der um eine vertikale Achse dreht, so dass der dritte Schlitten (300) in beiden Richtungen um die Achse drehen kann;
wobei der Schwenkring während Nutzung über Befestigungsmittel translatorisch mit einem Flansch (232) des zweiten Schlittens (300) integral ist.

11. Vorrichtung nach dem vorhergehenden Anspruch, **dadurch gekennzeichnet, dass** der zweite Schlitten (300) Mittel (360) zum Steuern und drehenden Antreiben des zweiten Schlittens (300) umfasst, die auf den Schwenkring (340) wirken, wobei die Mittel zum drehenden Antreiben (360) bevorzugt eine Schnecke (361) umfassen, die mit einem Schraubenrad des Schwenkrings in Eingriff kommen kann und mittels eines Handrades (362) oder eines gesteuerten Motors betrieben werden kann.

12. Vorrichtung nach einem der Ansprüche 10-11, **dadurch gekennzeichnet, dass** jede Querflanke (310a) des zweiten Schlittenrahmens (310) versehen ist mit
- Längsstiften oder -löchern, die ausgelegt sind, um eine Achse für Längsdrehung (B-B) zu bilden, womit ein jeweiliger Flansch (431) der unteren Halterung (400) mittels jeweiliger komplementärer Löcher oder Stifte verbunden ist, um die Kippbewegung der unteren Halterung (400) in beiden Richtungen um die longitudinale Achse (B-B) zu ermöglichen.

13. Vorrichtung nach dem vorstehenden Anspruch, wobei die Kippbewegung der unteren Halterung (400) vorgesehen wird durch
- eine Vorrichtung (350), die einen Heber (351) mit Schraube/Innengewinde und/oder Rollkugelschraube umfasst und sich in vertikaler Richtung (Z-Z) erstreckt, wobei ein oberer Teil (351a) des Hebers am oberen Umfangsrahmen (310) des zweiten Schlittens (300) befestigt ist und der untere Teil (351b) desselben mit dem Flansch (431) der unteren Halterung (400) in einer exzentrischen Position in Bezug auf die longitudinale Drehachse (B-B) verbunden ist.

14. System für radiographische Analyse von gewerblichen Teilen mit großen Dicken, welches umfasst:
- eine geschlossene Isolationskammer (500) mit Wänden (501) mit einer Dicke, die eine Eindämmung der von einer Radiographiemaschine (1) emittierten Strahlung gewährleistet;
- eine Vorrichtung zum Bewegen der Radiographiemaschine (1) gemäß einem der vorhergehenden Ansprüche;
- eine Portalstruktur (505), die parallel zu den beiden Richtungen, d.h. longitudinale Richtung (X-X) und Querrichtung (Y-Y), beweglich ist, um das zu prüfende Teil (511) in eine Position für Röntgenstrahlenexposition zu bringen, wobei die Portalstruktur an der Decke und/oder an den Wänden der Kammer (500) positioniert ist.

15. System nach dem vorhergehenden Anspruch, umfassend: einen Drehtisch (510), der in der Kammer (500) angeordnet ist, zum Positionieren des einer radiologischen Prüfung zu unterziehenden Teils (511); und/oder
- Detektionsmittel, die optische Emitter umfassen, die an der unteren Halterung (400) befestigt sind; und/oder
- ein Labyrinth (508), das durch eine versetzte und verbundene Anordnung von Abteilen und Wänden gebildet ist und das die Isolationskammer mit einer daran angrenzenden Steuerkammer verbindet.

## Revendications

1. Appareil pour déplacer un appareil de radiographie de poids élevé (1) destiné à des applications industrielles, comprenant :
- un châssis sensiblement rectangulaire (100) s'étendant parallèlement à un plan (X-Z) parallèle à une direction longitudinale dans le sens de la longueur (X-X) de l'appareil, et à une direction verticale dans le sens de la hauteur (Z-Z) de l'appareil, ayant une plus grande dimension parallèle à la direction verticale (Z-Z) et pouvant se déplacer en translation dans les deux sens de la direction longitudinale (X-X) par des moyens pour assurer un mouvement de translation du châssis (100),
- un premier chariot (200) pouvant se déplacer sur le châssis (100) dans les deux sens de la direction verticale (Z-Z),
- un deuxième chariot (300) monté sur le premier chariot (200), et pouvant être déplacé par rapport à celui-ci, dans les deux sens d'une direction transversale (Y-Y) perpendiculaire aux directions longitudinale (X-X) et verticale (Z-Z), et adapté pour tourner autour d'un axe parallèle à la direction verticale (Z-Z),
- un support inférieur (400) pour l'appareil de radiographie (1), monté sur le deuxième chariot (300) et adapté pour pivoter autour d'un axe parallèle à la direction longitudinale (X-X) par rapport au deuxième chariot (300),
- une poutre (2) s'étendant dans la direction longitudinale (X-X) et pouvant être fixée à un mur, ladite poutre comprenant des moyens complémentaires aux moyens pour assurer le mouvement de translation du châssis (100) qui peut, de ce fait, se déplacer sur la poutre (2) dans les deux sens de ladite direction longitudinale (X-X),
dans lequel, dans une position intermédiaire dans la direction verticale (Z-Z), le châssis (100) comporte des jambes de force de contre-poussée (130), s'étendant parallèlement à la direction transversale (Y-Y) pour maintenir, pendant l'utilisation, le châssis espacé et aligné par rapport à un mur sur lequel la poutre (2) est également fixée.

2. Appareil selon la revendication 1, **caractérisé en ce que** le châssis (100) comprend des montants verticaux (100a) et des traverses longitudinales (100b), des guides (101) pour le mouvement de coulissement du premier chariot (200) dans la direction verticale étant fixés aux montants (100a),
et **en ce que** le châssis (100) comporte, à sa partie supérieure, des moyens pour déplacer le premier chariot (200) pour le monter et le descendre de manière contrôlée dans la direction verticale (Z-Z).

3. Appareil selon la revendication 2, **caractérisé en ce que** lesdits moyens pour déplacer le premier chariot comprennent un treuil (110) avec un axe longitudinal, les câbles (111) de celui-ci étant fixés au premier chariot.

4. Appareil selon l'une quelconque des revendications 1 à 3, **caractérisé en ce que** lesdits moyens pour assurer un mouvement de translation du châssis (100) comprennent un moteur (120), de préférence, une paire de moteurs synchronisés, avec un axe vertical, conçue pour provoquer la rotation de rouleaux agissant sur la poutre longitudinale (2) pour induire le mouvement de translation du châssis (100) dans les deux sens de la direction longitudinale (X-X).

5. Appareil selon l'une quelconque des revendications 1 à 4, **caractérisé en ce qu'**il comprend une plaque de contact longitudinal (4) qui est fixée audit mur et sur laquelle agissent les jambes de force de contre-poussée (130).

6. Appareil selon l'une quelconque des revendications précédentes, **caractérisé en ce que** le premier chariot (200) comprend :
-- des montants verticaux (200a) ayant, montés dessus des sabots (201) pour coulisser sur les guides (101) du châssis (100), pour assurer le mouvement de translation vertical du deuxième chariot (200) par rapport au châssis (100),
-- un premier bras longitudinal supérieur (200d) pour raccorder les montants verticaux (200a) dans la direction longitudinale (X-X),
-- une paire de bras transversaux parallèles (200b) s'étendant à partir du premier bras longitudinal (200d) et conçue pour supporter un ensemble (220, 230) pour assurer le mouvement du deuxième chariot (300) dans la direction transversale (Y-Y).

7. Appareil selon la revendication précédente, **caractérisé en ce que** ledit ensemble (220, 230) pour assurer le mouvement du deuxième chariot (300) dans la direction transversale (Y-Y) comprend :
--- une pièce d'assemblage (220) qui est fixée transversalement en translation par rapport aux bras (200b) et comprend une paire de guides transversaux (225), chacun respectivement fixé à l'un des bras transversaux (200b) dans une position interne dans la direction longitudinale (X-X) par rapport audit bras (200b) et
un moteur (220a), dont l'arbre porte un pignon (221) avec un axe longitudinal conçu pour s'engrener sur une crémaillère linéaire transversale (231) solidaire, pendant l'utilisation, du deuxième chariot (300) .

8. Appareil selon la revendication précédente, **caractérisé en ce que** ledit ensemble (220, 230) pour assurer le mouvement du deuxième chariot (300) dans la direction transversale (Y-Y) comprend :
--- une pièce d'assemblage (230) pouvant se déplacer en translation dans les deux sens de la direction transversale (Y-Y) par rapport aux bras (200b), et comprenant une bride (232) pour porter le deuxième chariot (300),
la crémaillère transversale (231) étant fixée sur la bride (232),
le pignon (221) s'engrenant sur la crémaillère (231) de manière à induire, lorsque le moteur (220a) fonctionne, une translation de la bride (232) dans les deux sens de la direction transversale (Y-Y).

9. Appareil selon la revendication 8 dans lequel la bride (232) possède une extension longitudinale inférieure à la distance longitudinale entre les deux bras transversaux (200b) et est montée sur des sabots coulissants transversaux (235) pour s'accoupler aux guides (225) afin d'assurer un mouvement de translation de la bride (232) dans la direction transversale.

10. Appareil selon l'une quelconque des revendications précédentes, dans lequel le deuxième chariot (300) comprend :
-- un châssis périmétrique supérieur (310) qui, dans une position centrale, est forcé sur une bague pivotante (340) tournant autour d'un axe vertical, de sorte que le troisième chariot (300) peut tourner dans les deux sens autour dudit axe;
la bague pivotante, pendant l'utilisation étant solidaire en translation avec une bride (232) du deuxième chariot (300) par des moyens de fixation.

11. Appareil selon la revendication précédente, **caractérisé en ce que** le deuxième chariot (300) comprend des moyens (360) pour contrôler et actionner en rotation le deuxième chariot (300) qui agissent sur la bague pivotante (340), dans lequel lesdits moyens d'actionnement rotationnels (360) comprennent de préférence une vis sans fin (361) qui peut s'engrener sur une roue hélicoïdale de la bague pivotante et qui peut être actionnée au moyen d'un volant (362) ou d'un moteur contrôlé.

12. Appareil selon l'une quelconque des revendications 10 et 11, **caractérisé en ce que** chaque flanc transversal (310a) du châssis du deuxième chariot (310) est muni de
-- goupilles ou trous longitudinaux(nales) conçu(e)s pour former un axe de rotation longitudinale (B-B) auquel une bride respective (431) du support inférieur (400) est raccordée au moyen de trous ou de goupilles complémentaires respectif(ve)s, de manière à permettre le mouvement de basculement du support inférieur (400) dans les deux sens autour dudit axe longitudinal (B-B).

13. Appareil selon la revendication précédente, dans lequel le mouvement de basculement du support inférieur (400) est assuré par
-- un dispositif (350) comprenant un vérin (351) avec un filetage vis / femelle et / ou une vis à billes roulantes, et s'étendant dans la direction verticale (Z-Z), une partie supérieure (351a) dudit vérin étant fixée au châssis périmétrique supérieur (310) du deuxième chariot, et la partie inférieure (351b) de celui-ci étant raccordée à la bride (431) du support inférieur (400) dans une position excentrique par rapport à l'axe longitudinal (B-B) de rotation.

14. Système d'analyse radiographique de pièces industrielles de grande épaisseur, qui comprend :
- une chambre d'isolation fermée (500) avec des murs (501) ayant une épaisseur permettant d'assurer le confinement du rayonnement émis par une machine de radiographie (1),
- un appareil pour déplacer la machine de radiographie (1) selon l'une quelconque des revendications précédentes,
- une structure en portique (505) pouvant se déplacer parallèlement aux deux directions, à savoir, la direction longitudinale (X-X) et la direction transversale (Y-Y), pour permettre l'inspection de la pièce (511) dans une position d'exposition aux rayons X, la structure en portique étant positionnée au plafond et / ou sur les murs de la chambre (500).

15. Système selon la revendication précédente, comprenant : une table rotative (510) positionnée à l'intérieur de la chambre (500), pour positionner la pièce (511) afin de la soumettre à un contrôle radiographique et / ou
- des moyens de détection qui comprennent des émetteurs optiques fixés au support inférieur (400) ; et / ou
- un labyrinthe (508) qui est formé par un agencement de compartiments et de murs, en quinconce et raccordés, et qui raccorde la chambre d'isolation à une chambre de contrôle qui lui est adjacente.
